(19) Europäisches Patentamt

European Patent Office

Office européen des brevets

(11) **EP 1 512 269 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(21) Anmeldenummer: **03727492.5**

(22) Anmeldetag: **21.05.2003**

(51) Int Cl.:
*H04M 3/30* (2006.01)     *H04L 25/02* (2006.01)

(86) Internationale Anmeldenummer:
**PCT/EP2003/005333**

(87) Internationale Veröffentlichungsnummer:
**WO 2003/107639 (24.12.2003 Gazette 2003/52)**

(54) **VERFAHREN UND SCHALTANORDNUNG ZUM ERKENNEN VON PUPINSPULEN**

METHOD AND CIRCUIT ARRANGEMENT FOR RECOGNISING LOAD COILS

PROCEDE ET CIRCUIT POUR RECONNAITRE LA PRESENCE DE BOBINES DE CHARGE

(84) Benannte Vertragsstaaten:
**DE FR GB**

(30) Priorität: **13.06.2002 DE 10226348**

(43) Veröffentlichungstag der Anmeldung:
**09.03.2005 Patentblatt 2005/10**

(73) Patentinhaber: **Infineon Technologies AG**
**81669 München (DE)**

(72) Erfinder: **SCHENK, Heinrich**
**81476 München (DE)**

(74) Vertreter: **Charles, Glyndwr et al**
**Reinhard-Skuhra-Weise & Partner,**
**Patentanwälte,**
**Friedrichstrasse 31**
**80801 München (DE)**

(56) Entgegenhaltungen:
| | |
|---|---|
| WO-A-01/52439 | WO-A-02/13405 |
| WO-A-02/091721 | US-A- 5 404 388 |
| US-A- 5 881 130 | US-B1- 6 215 855 |

**Beschreibung**

Die Erfindung betrifft ein Verfahren und eine Schaltanordnung zum Erkennen von Pupinspulen in einer Telekommunikationsleitung gemäß dem Oberbegriff von Anspruch 1 bzw. 9.

Die US 6,215,855 B1 beschreibt ein Verfahren zum Testen einer Datenübertragungsleitung, wobei ein Testsignal durch eine Sendevorrichtung an die Datenübertragungsleitung angelegt wird und eine mit der Datenübertragungsleitung verbundene Empfangsvorrichtung ein Empfangssignal empfängt und weiterverarbeitet. Aus dem Empfangssignal wird der Frequenzgang bestimmt, um den Einfluss der Datenübertragungsleitung auf das bekannte Testsignal zu bestimmen.

Zur Erhöhung der Reichweite beim Telefonieren wurden früher gelegentlich in regelmäßigen Abständen Induktivitäten (sogenannte Pupinspulen oder Load Coils) in die Teilnehmeranschlussleitung geschaltet. Diese bewirken innerhalb der Telefonbandbreite bis etwa 3,5 kHz eine geringere Dämpfung und somit eine Erhöhung der Reichweite oder eine Verbesserung der Übertragungsqualität beim Telefonieren.

Für den Frequenzbereich oberhalb von etwa 3,5 kHz steigt jedoch die Dämpfung stark an, so dass derartige Anschlussleitungen nicht für eine DSL- Anschlusstechnik (z.B. ISDN, SDSL, ADSL,VDSL) geeignet sind. Erst wenn sichergestellt ist, dass eine Anschlussleitung frei von Pupinspulen ist, kann diese Leitung auf eine DSL- Übertragungstechnik umgerüstet werden.

Eine Entscheidung darüber, ob eine Leitung eine Pupinspule enthält, kann entweder durch Auswertung möglicherweise vorhandener Installationsdokumentationen oder durch entsprechende Messungen vorgenommen werden. Bei Messungen wird zwischen einseitigen und zweiseitigen Messanordnungen unterschieden.

Bei zweiseitigen Messanordnungen kann durch Messung der frequenzabhängigen Leitungsdämpfung sehr genau auf das Vorhandensein von Pupinspulen geschlossen werden. Derartige Messanordnungen sind für den praktischen Einsatz jedoch nicht besonders gut geeignet, da sowohl das vermittlungsseitige als auch das teilnehmerseitige Leitungsende mit der Messanordnung verbunden werden muss.

Bei einer einseitigen Messanordnung kann durch Messung des Eingangswiderstands innerhalb der Telefonbandbreite bis etwa 4 kHz das Vorhandensein einer Pupinspule erkannt werden. Bei einer Leitung ohne Beschaltung mit Pupinspulen erhält man einen monoton mit der Frequenz abfallenden Betrag des Eingangswiderstands. Er beträgt bei 3,5 kHz weniger als 1.500 $\Omega$. Abhängig von der Leitungslänge und den Leitungsparametern kann der Eingangswiderstand auch nur etwa 400 $\Omega$ betragen. Bei einer Beschaltung mit Pupinspulen ergibt sich im Frequenzbereich unterhalb von 4 kHz für den Eingangswiderstand ein Verlauf mit mehreren lokalen Maxima, wobei die Anzahl der lokalen Maxima von der Anzahl der Pupinspulen abhängt. Das absolute Maximum liegt bei etwa 3 bis 4 kHz und beträgt mehr als 3.000 $\Omega$. Durch Messung des Eingangswiderstands im Frequenzbereich zwischen 3 und 4 kHz kann somit festgestellt werden, ob Pupinspulen vorhanden sind. Die Messung des Eingangswiderstands muss unmittelbar am Leitungseingang erfolgen. Die Beschaltung der Leitung mit einem DSL- Transceiver erfolgt jedoch immer über einen Übertrager und einer Hybrid-Anordnung (Zweidraht - Vierdraht - Umsetzung). Der Übertrager verändert den frequenzabhängigen Verlauf des Eingangswiderstands, d.h. der Übertrager- Leitung derart, dass eine eventuell vorhandene Pupinspule auf diese einfache Weise nicht mehr einfach und sicher erkannt werden kann.

Aufgabe der Erfindung ist es, ein Verfahren sowie eine entsprechende Schaltungsanordnung zur Erkennung von Pupinspulen anzugeben.

Diese Aufgabe wird erfindungsgemäß durch das Verfahren nach Anspruch 1 bzw. die Schaltungsanordnung zur Erkennung von Pupinspulen nach Anspruch 9 gelöst. Bevorzugte Ausführungsformen der Erfindung sind Gegenstand der Unteransprüche.

Das erfindungsgemäße Verfahren beruht darauf, nicht den Eingangswiderstand, sondern die Echoübertragungsfunktion zur Erkennung der Pupinspulen (Load Coils) heranzuziehen.

Das erfindungsgemäße Verfahren zum Erkennen von in einer Teilnehmeranschlussleitung zwischengeschalteten Pupinspule, umfasst dementsprechend die Schritte: Aussenden von periodischen Sendesymbolen durch eine Sendevorrichtung, Empfangen, Abtasten und Weiterverarbeitung eines analogen Empfangssignals durch eine Empfangsvorrichtung, Bestimmen des Frequenzgangs des Empfangssignals für eine vorgegebene Anzahl von Frequenzpunkten in einem vorgegebenen Frequenzbereich, Berechnen einer Funktion mit Funktionswerten aus dem Realteil und dem Imaginärteil des Frequenzgangs des Empfangssignals und Ermitteln eines Differenzvektors aus den Funktionswerten durch eine Recheneinheit, wobei aus den Komponenten des Differenzvektors ein Kriterium abgeleitet wird, das angibt, ob eine pupinisierte Leitung vorhanden ist.

Bei einer bevorzugten Ausführungsform des Verfahrens wird ein erster Teilvektor und ein zweiter Teilvektor aus den Funktionswerten durch einen Funktionsgenerator gebildet, ein Zwischenvektor aus dem zweiten Teilvektor durch eine Matrixmultiplikationsvorrichtung ermittelt und aus dem ersten Teilvektor und dem Zwischenvektor der Differenzvektor in einer Differenzstufe gebildet. Vorzugsweise umfasst dabei der erste Teilvektor als Komponenten die Funktionswerte mit geradzahligem Index und der zweite Teilvektor als Komponenten die Funktionswerte mit ungeradzahligem Index.

Vorzugsweise besteht das Kriterium darin, dass die Differenz zwischen einem Maximalwert und einem Minimalwert der Komponenten des Differenzvektors in einer Vergleichervorrichtung mit einem Differenzvorgabewert verglichen wird, und ein Signal ausgegeben wird, wenn die Differenz größer als der Differenzvorgabewert ist, oder darin, dass die Summe der Betragswerte der Komponenten des Differenzvektors in einer Vergleichervorrichtung mit einem Summenvorgabewert verglichen wird, und ein Signal ausgegeben wird, wenn die Summe größer als der Summenvorgabewert ist, oder darin, dass die Summe der Quadrate der Komponenten des Differenzvektors in einer Vergleichervorrichtung mit einem Quadratsummenvorgabewert verglichen wird, und ein Signal ausgegeben wird, wenn die Summe größer als der Quadratsummenvorgabewert ist, oder darin, dass die Anzahl der wesentlich von Null verschiedenen Komponenten des Differenzvektors in einer Vergleichervorrichtung mit einem Nullkomponentenvorgabewert verglichen wird, und ein Signal ausgegeben wird, wenn die Summe größer als der Nullkomponentenvorgabewert ist.

Um in dem letzten Fall die Anzahl der wesentlich von Null verschiedenen Komponenten des Differenzvektors bestimmen zu können, werden die Koeffizienten gerundet und mit einer endlichen Wortlänge dargestellt, wobei die Quantisierungsgröße (Wortlänge) so gewählt wird, dass bei einer nicht- pupinisierten Leitung sich für alle Koeffizienten die Werte Null ergeben.

Der bevorzugte vorgegebene Frequenzbereich liegt zwischen etwa 1 und 5 kHz.

Die Vorrichtung für das Verfahren zum Erkennen von in einer Teilnehmeranschlussleitung zwischengeschalteten Pupinspule ist versehen mit einer Sendevorrichtung zum Aussenden von periodischen Sendesymbolen, einer Empfangsvorrichtung zum Empfangen, Abtasten und Weiterverarbeitung eines analogen Empfangssignals und einer Recheneinheit zum Bestimmen des Frequenzgangs des Empfangssignals für eine vorgegebene Anzahl von Frequenzpunkten in einem vorgegebenen Frequenzbereich, Berechnen einer Funktion mit Funktionswerten aus dem Realteil und dem Imaginärteil des Frequenzgangs des Empfangssignals und Ermitteln eines Differenzvektors aus den Funktionswerten, wobei aus den Komponenten des Differenzvektors ein Kriterium abgeleitet wird, das angibt, ob eine pupinisierte Leitung vorhanden ist.

Ein Vorteil der Erfindung besteht u.a. darin, dass für die Messung der Echoübertragungsfunktion ausschließlich das im DSL- Empfänger abgetastete Empfangssignal bei Aussenden von speziellen Testsignalen verarbeitet zu werden braucht. Das Verfahren ist daher insbesondere bei Beschaltung mit einem DSL- Übertrager und einer entsprechenden Hybrid- Anordnung geeignet und kann in einem DSL- Transceiver integriert werden.

Weitere Merkmale und Vorteile der Erfindung ergeben sich aus der folgenden Beschreibung von Ausführungsbeispielen, bei der Bezug genommen wird auf die beigefügten Zeichnungen.

Fig. 1 zeigt das Blockschaltbild eines an sich bekannten Transceivers.

Fig. 2 zeigt die Leitungskonfiguration einer pupinisierten Leitung.

Fig. 3 zeigt einen Verlauf von $F(f)$ für verschiedene Leitungskonfigurationen.

Fig. 4 zeigt einen Verlauf von $\Delta F(f)$ für verschiedene Leitungskonfigurationen

Fig. 5 zeigt den Verlauf des Frequenzgangs von $\Delta r(f_i)$ für verschiedene Leitungskonfigurationen.

Fig. 6 zeigt den Verlauf des Real- und Imaginärteils des Frequenzgangs von $\Delta r(f_i)$ für verschiedene Leitungskonfigurationen.

Fig. 7 zeigt eine erste Ausführungsform der erfindungsgemäßen Schaltungsanordnung zum Erkennen von Pupinspulen.

Fig. 8 zeigt eine zweite Ausführungsform der erfindungsgemäßen Schaltungsanordnung zum Erkennen von Pupinspulen.

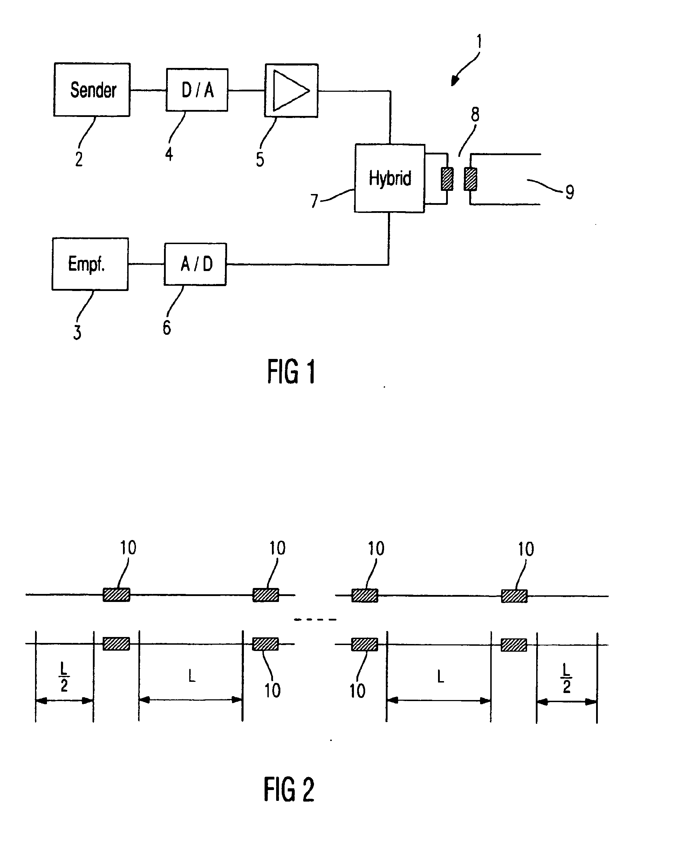

Fig. 1 zeigt das Blockschaltbild eines an sich bekannten digitalen Transceivers 1 mit einem digitalen Sender 2, einem digitalen Empfänger 3, einem senderseitigen D/A- Umsetzer 4 und einem empfängerseitigen A/D- Umsetzer 6, einem Leitungsverstärker (Line- Driver) 5 sowie einer Leitungsanschaltung (Hybrid) 7. Eine Übertragungsleitung 9 ist über einen Leitungsübertrager 8 mit der Leitungsanschaltung 7 verbunden.

Die Teilnehmeranschlussleitung 9 ist entweder eine nicht pupinisierte Leitung (ohne Pupinspulen) oder eine pupinisierte Leitung (mit Pupinspulen).

Für die Beschreibung der Pupinleitung wird in den USA eine einfache Nomenklatur verwendet. Am häufigsten findet man Leitungen mit der Bezeichnung D66 und H88. Bei der D66- Leitung beträgt die Induktivität der Pupinspule 66 mH und bei der H88 Leitung 88 mH. Der Abstand zweier Spulen beträgt 1356 m bzw. 1829 m (4450 ft bzw. 6000 ft). Dabei besitzt die D66- Leitung eine Grenzfrequenz von etwa 3,4 kHz und die H88- Leitung eine Grenzfrequenz von etwa 4 kHz.

Die Leitungskonfiguration einer pupinisierten Leitung ist in Fig. 2 gezeigt. Es ist eine Anschlussleitung 9 mit Induktivitäten 10 dargestellt, wobei die Leitung 9 eine D66- oder eine H88- Leitung sein kann, d.h. die Länge L zwischen zwei benachbarten Induktivitäten 10 beträgt 1356 m bei der D66- Leitung bzw. 1829 m bei der H88- Leitung.

Zur Erkennung, ob die angeschlossene Übertragungsleitung Pupinspulen enthält, wird die Übertragungsfunktion für verschiedene Frequenzen ausgewertet. Als Übertragungsfunktion wird hierbei das Verhältnis von Empfangssignal zu Sendesignal bezeichnet, wenn ein sinusförmiges Signal mit einer bestimmten Frequenz ausgesendet wird.

Die Ermittlung der Übertragungsfunktion wird im folgenden erläutert.

Es soll die Übertragungsfunktion bei der Frequenz $f_0$ ermittelt werden. Hierzu wählt man für den Transceiver eine Baudrate $f_r$ von

$$f_T = N \cdot f_0 ,$$

wobei N geradzahlig ist (z.B. N=32).

Es wird dann eine periodische Datenfolge mit $\frac{N}{2}$ positiven und $\frac{N}{2}$ negativen Symbolen mit jeweils gleicher Amplitude ausgesendet. Somit enthält das Sendesignal neben der Grundwelle mit der Frequenz $f_0$ auch nicht- geradzahlige Oberwellen.

Zur Ermittlung der Übertragungsfunktion bei der Frequenz $f_0$ muss aus dem Empfangssignal die Grundwelle herausgefiltert werden. Hierzu wird das mit der Baudrate (Symbolrate) $f_T$ abgetastete Signal einerseits mit dem Cosinus der Grundwelle und andererseits mit dem Sinus der Grundwelle multipliziert. Man erhält dann die beiden Signale

$$y_1(k) = y(k) \cdot \cos\left( 2 \cdot \pi \cdot \frac{k}{N} \right)$$

und

$$y_2(k) = y(k) \cdot \sin\left( 2 \cdot \pi \cdot \frac{k}{N} \right),$$

mit $k$ = 1 bis N.

Den Realteil bzw. den Imaginärteil der Übertragungsfunktion erhält man aus dem arithmetischen Mittelwert der beiden Signalfolgen, wobei über eine ganzzahlige Anzahl M von Signalperioden gemittelt werden muss.

Der Realteil bzw. der Imaginärteil des Frequenzgangs kann somit mit den folgenden Beziehungen ermittelt werden:

$$\mathrm{Re}\{H(f_0)\} = \frac{2}{N \cdot M} \sum_{k=1}^{N \cdot M} y_1(k)$$

und

$$\mathrm{Im}\{H(f_0)\} = \frac{2}{N \cdot M} \sum_{k=1}^{N \cdot M} y_2(k) .$$

Zur Messung des Frequenzgangs muss der Realteil bzw. der Imaginärteil außer für $f_0$ für verschiedene weitere Frequenzen $f$ durch entsprechende Veränderung der Baudrate (Symbolrate) $f_T$ ermittelt werden.

Zum Detektieren von Pupinspulen werden sowohl der Realteil als auch der Imaginärteil

$$a(f) = \mathrm{Re}\{H(f)\}$$

und

$$b(f) = \operatorname{Im}\{H(f)\}$$

des Frequenzgangs weiter verarbeitet.

Zunächst wird aus *a* und *b* eine geeignete Funktion zur weiteren Verarbeitung gebildet. Diese Funktion kann z.B. das Quadrat des Betrags $F(f)=a(f)^2+b(f)^2$ aus Real- und Imaginärteil, der Betrag $F(f) = \sqrt{a(f)^2 + b(f)^2}$ aus Real- und Imaginärteil, die Summe $F(f)=a(f)+b(f)$ aus Real- und Imaginärteil, die Differenz $F(f)=a(f)-b(f)$ aus Real- und Imaginärteil oder das Produkt $F(f)=a(f)\cdot b(f)$ aus Real- und Imaginärteil sein.

Bei einer Leitung ohne Pupinspulen erhält man für die aus *a* und *b* abgeleitete Funktion F einen weitgehend glatten Verlauf, der von der Frequenz abhängt, während sich bei einer Leitung mit Pupinspulen ein leicht "gewellter" Verlauf im Frequenzbereich von etwa 2 kHz bis 4 kHz ergibt.

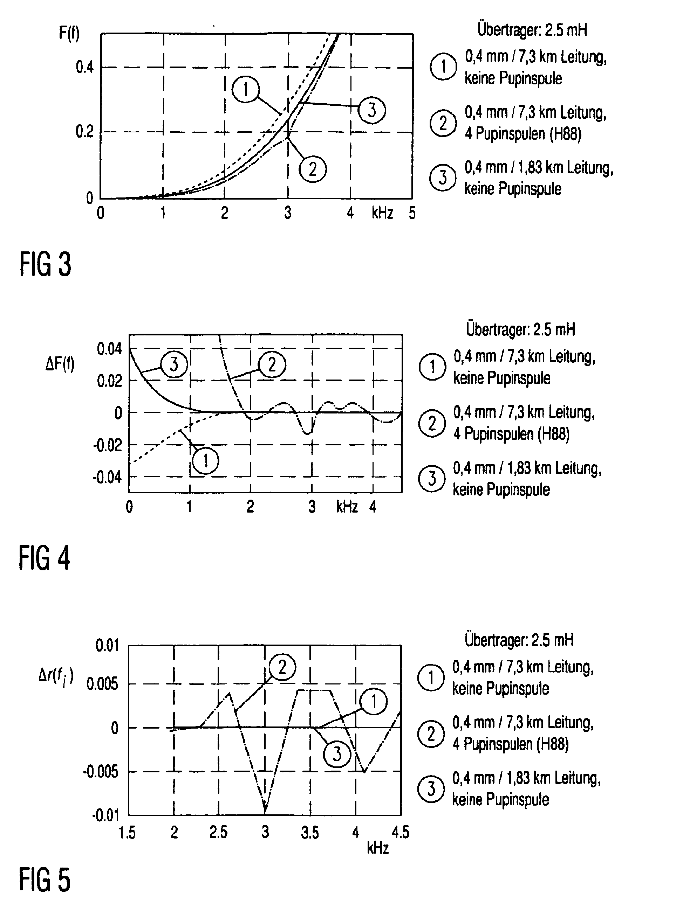

Der Verlauf von F ist in Fig. 3 veranschaulicht. In Fig. 3 wurde als Funktion zur weiteren Verarbeitung das Quadrat des Betrags des Frequenzgangs $F(f)=a(f)^2+b(f)^2$ verwendet.

In Fig. 3 sind drei verschiedene Kurve aufgetragen, die mit "1", "2" und "3" bezeichnet sind. Kurve "1" entspricht einer Leitung von 0,4 mm Dicke und 7,3 km Länge. Sie hat in dem gezeigten Beispiel keine Pupinspule. Kurve "2" entspricht einer Leitung von 0,4 mm Dicke und 7,3 km Länge. Sie hat in dem gezeigten Beispiel vier Pupinspulen in der H88- Anordnung. Kurve "3" entspricht einer Leitung von 0,4 mm Dicke und 1,83 km Länge. Sie hat in dem gezeigten Beispiel keine Pupinspule.

Für die weitere Verarbeitung werden nur Stützstellen der verwendeten Funktion zu einigen Frequenzpunkten im Bereich von etwa 1 kHz bis etwa 5 kHz ausgewählt. Aus diesen Stützwerten wird eine entsprechende Referenzfunktion $F(f)$ berechnet. Die Referenzfunktion stellt eine Potenzfunktion der Frequenz dar und nähert die ursprünglich gemessene Funktion im Sinne der kleinsten quadratischen Abweichung an:

$$F(f) = \sum_{i=0}^{n} \alpha_i \cdot f^i \;.$$

Die Koeffizienten $\alpha_i$ werden aus den bei den Frequenzwerten *f* gemessenen Stützwerten der Funktion $F(f)$ berechnet.

Während bei einer Leitung ohne Pupinspule die Referenzfunktion $F(f)$ sehr gut mit der abgeleiteten Funktion übereinstimmt, ist bei einer Leitung mit Pupinspulen eine Approximation mit einer Potenzfunktion nur mit großen Abweichungen möglich.

Zur Erkennung von Pupinspulen wird nun die Differenz von der ursprünglichen Funktion und der Referenzfunktion herangezogen.

In Fig. 4 ist die jeweilige Differenzfunktion der in Fig. 3 verwendeten Beispiele für den Verlauf gezeigt. Die Parameter der Kurven "1", "2" und "3" sind die gleichen wie in Fig. 3. Die Koeffizienten $\alpha_i$ wurden aus jeweils acht Stützwerten im Bereich von 1,9 bis 4,5 Hz berechnet.

Im folgenden wird das Verfahren zur Berechnung der $\alpha_i$ und die Ermittlung der Referenzfunktion daraus genauer beschrieben.

Es werden m Frequenzpunkte $f_i$ mit *i*= 1 bis m betrachtet. Mit diesen wird die Rechteckmatrix Q mit den Koeffizienten

$$Q_{i,j} = f_i^{j-1}$$

mit i= 1 bis m und *j* = 1 bis n+1 gebildet. Es ergibt sich dann z.B. für n = 4 und m = 8 die folgende Rechteckmatrix

$$Q = \begin{bmatrix} 1 & f_1 & f_1^{\,2} & f_1^{\,3} & f_1^{\,4} \\ 1 & f_2 & f_2^{\,2} & f_2^{\,3} & f_2^{\,4} \\ 1 & f_3 & f_3^{\,2} & f_3^{\,3} & f_3^{\,4} \\ 1 & f_4 & f_4^{\,2} & f_4^{\,3} & f_4^{\,4} \\ 1 & f_5 & f_5^{\,2} & f_5^{\,3} & f_5^{\,4} \\ 1 & f_6 & f_6^{\,2} & f_6^{\,3} & f_6^{\,4} \\ 1 & f_7 & f_7^{\,2} & f_7^{\,3} & f_7^{\,4} \\ 1 & f_8 & f_8^{\,2} & f_8^{\,3} & f_8^{\,4} \end{bmatrix} .$$

Aus m Werten der auszuwertenden Funktion $F(f)$ wird ein Vektor r mit den Komponenten

$$r_i = F(f_i)$$

gebildet.

Im folgenden werden zwei Alternativen bei der Auswertung des Vektors r erläutert, um für die weitere Auswertung der Messung einen Differenzvektor zu bestimmen.

Bei einem ersten Auswerteverfahren lässt sich für m = 8 der Vektor r wie folgt darstellen:

$$r = \begin{bmatrix} F(f_1) \\ F(f_2) \\ F(f_3) \\ F(f_4) \\ F(f_5) \\ F(f_6) \\ F(f_7) \\ F(f_8) \end{bmatrix} .$$

Mit dem Vektor $r$ erhält man einen Koeffizientenvektor $\alpha$ mit den Koeffizienten $\alpha_i$ nach der Beziehung

$$\alpha = \left( Q^T \cdot Q \right)^{-1} \cdot Q^T \cdot r .$$

Hierbei bezeichnet das hochgestellte T die Transponierungsoperation.

Mit

$$R = \left( Q^T \cdot Q \right)^{-1} \cdot Q^T$$

lässt sich dies zusammenfassen zu:

6

$$\alpha = R \cdot r \, .$$

Die Rechteckmatrix R ist nur von den Frequenzstützwerten und der Vektor $r$ nur von den Stützwerten der auszuwertenden Funktion $F(f_i)$ abhängig.

Die Auswertung der Differenzfunktion erfolgt ebenfalls nur mit den Stützwerten, mit denen der Koeffizientenvektor berechnet wurde.

Mit dem Koeffizientenvektor $\alpha$ erhält man für den Referenzvektor

$$r_{ref} = Q \cdot \alpha \, ,$$

und für den Differenzvektor ergibt sich

$$\Delta r = r - r_{ref} = r - Q \cdot \alpha = r - Q \cdot R \cdot r = \left[E - Q \cdot R\right] \cdot r \, ,$$

wobei die Matrix E eine (m x m)- Einheitsmatrix ist.

Schreibt man für die Matrix

$$P = \left[E - Q \cdot R\right] ,$$

lässt sich der Differenzvektor darstellen als

$$\Delta r = P \cdot r \, .$$

Hierbei ist P eine quadratische, symmetrische (m x m)- Matrix, die nur von den Frequenzstützpunkten abhängt. Der Vektor r enthält unmittelbar die Stützwerte der auszuwertenden Funktion, die durch entsprechende Verknüpfung aus den gemessenen Real- und Imaginärteilen der Übertragungsfunktion gewonnen wird. Jeden Wert des Differenzvektors erhält man demnach durch Multiplikation eines Zeilenvektors mit einem Spaltenvektor.

Im folgenden wird ein alternativer Ansatz angegeben, der eine schnellere Berechnung zulässt, um den Differenzvektor zu bestimmen.

Bei diesem zweiten Ansatz wird der ursprüngliche Vektor r in zwei Teilvektoren $r1$ und $r2$ aufgeteilt, wobei beispielsweise der Vektor $r1$ die Komponenten von $r$ mit den ungeraden Frequenznummern und der Vektor $r2$ die Komponenten von r mit den geraden Frequenznummern enthält.

Mit dem Vektor $r2$ lassen sich die unbekannten Koeffizienten des Vektors $\alpha$ berechnen nach

$$\alpha = \left(Q_2^{\,T} \cdot Q_2\right)^{-1} \cdot Q_2^{\,T} \cdot r2 = R2 \cdot r2 \, ,$$

wobei sich die Matrizen $Q_2$ bzw. R2 jeweils aus den gleichen Frequenzstützwerten wie $r2$ ergeben (z.B. die geraden Frequenzstützwerte).

Der Referenzvektor wird nur für die Frequenzstützwerte berechnet, die dem Vektor $r1$ entsprechen. Für diesen Referenzvektor erhält man

$$r1_{ref} = Q_1 \cdot \alpha = Q_1 \cdot R2 \cdot r2 \ .$$

Die Matrix $Q_1$ ergibt sich dabei aus den Frequenzstützwerten, die zur Ermittlung des Vektors $r1$ zugrunde gelegt wurden.

Der Differenzvektor ist dann

$$\Delta r1 = r1 - r1_{ref} = r1 - Q_1 \cdot R2 \cdot r2 \ .$$

Mit

$$P12 = Q_1 \cdot R2$$

erhält man daraus

$$\Delta r1 = r1 - P12 \cdot r2 \ .$$

Der Differenzvektor $\Delta r1$ ergibt sich somit aus der Differenz des Vektors $r1$ und eines Vektors, der sich aus dem Produkt einer quadratischen Matrix P12 und des Vektors $r2$ ergibt. Dabei wird in dem obigen Beispiel $r1$ aus den ungeraden Frequenzstützwerten ermittelt und $r2$ aus den geraden Frequenzstützwerten ermittelt.

Der Aufwand bei der Realisierung ist bei der zweiten Ausführungsform geringer als bei der ersten Ausführungsform zum Bestimmen des Differenzvektors, da die Matrixmultiplikation mit einer geringeren Anzahl von Koeffizienten durchgeführt wird.

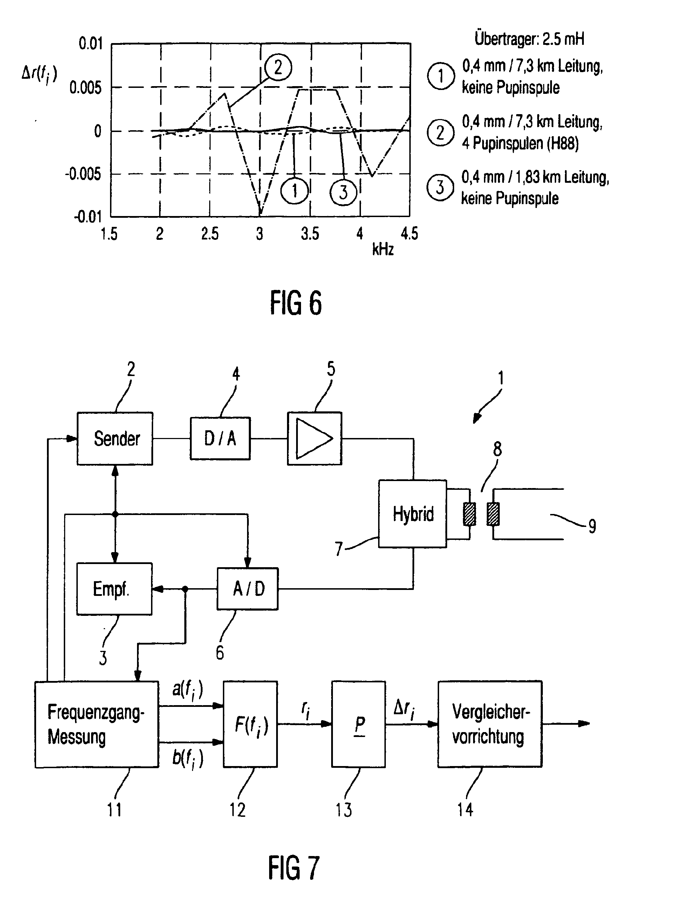

Die Differenzvektoren sind in Fig. 5 gezeigt. Die Parameter der Kurven "1", "2" und "3" sind die gleichen wie in Fig. 3 bzw. Fig. 4.

Die Werte stimmen mit den Differenzfunktionen aus Fig. 4 überein, wenn für die Frequenzen deren Stützwerte eingesetzt werden. Zur Berechnung wurden die Stützwerte der aus den Frequenzgangwerten ermittelten Werte der Übertragungsfunktion mit Genauigkeit des Rechners zugrungegelegt. Da die Frequenzgangwerte durch Messung ermittelt werden, muss zwangsläufig für $a(f)$ und b($f$) mit einer endlichen Genauigkeit gerechnet werden. Die mit einer endlichen Genauigkeit des Realteils $a(f)$ und des Imaginärteils $b(f)$ von 10 Bit ermittelten Differenzvektoren sind im Fig. 6 dargestellt. Die Parameter der Kurven "1", "2" und "3" sind die gleichen wie in Fig. 3, Fig. 4 bzw. Fig. 5. Für die nicht-pupinisierten Leitungen vergrößern sich zwar die Werte des Differenzvektors, sie sind jedoch noch deutlich kleiner als für die pupinisierte Leitung. Durch geeignete Auswertung des Differenzvektors kann somit auf das Vorhandensein von Pupinspulen geschlossen werden.

Im folgenden werden die Möglichkeiten zur Auswertung der Differenzfunktion bzw. des Differenzvektors erläutert, um zu einem Kriterium für die Entscheidung zu gelangen, ob eine Pupinspule in der untersuchten Leitung vorliegt - unabhängig von ihrer Konfiguration als D66- oder H88- Leitung.

Wie Fig. 5 und 6 zu entnehmen ist, ergeben sich bei nichtpupinisierten Leitungen Differenzvektoren, dessen Komponenten kleiner als bei pupinisierten Leitungen sind. Zur Erkennung von Pupinspulen kann daher der Differenzvektor herangezogen werden. Es ist zunächst ein Kriterium abzuleiten, wobei die eigentliche Erkennung durch Vergleich dieses Kriteriums mit einem geeignet zu wählenden Schwellenwert erfolgen kann.

Mögliche Kriterien sind 1) die Differenz zwischen Maximalwert und Minimalwert der Komponenten des Differenzvektors, d.h. $Kriterium = \Delta r_{max} - \Delta r_{min}$, 2) die Summe der Betragswerte der Komponenten des Differenzvektors, d.h.

$$Kriterium = \sum_i \Delta|r_i| \ ,$$ oder 3) die Summe der Quadrate der Komponenten des Differenzvektors, d.h.

$$Kriterium = \sum_i \Delta r_i{}^2 \quad \cdot$$ Als weiteres Kriterium kann 4) die Anzahl der von Null verschiedenen Komponenten definiert werden. Dazu werden die Koeffizienten zunächst gerundet und mit einer endlichen Wortlänge dargestellt. Die Quantisierungsgröße (Wortlänge) wird so gewählt, dass sich bei einer nicht-pupinisierten Leitung für alle Koeffizienten die Werte Null ergeben. In dem obigen Beispiel können als Wortlänge beispielsweise 9 Bit gewählt werden, die Quantisierungsstufe beträgt somit $2^{-8}$.

Die als Beispiel genannten Kriterien 1) bis 4) müssen nicht unmittelbar nach der Bestimmung des Differenzvektors geprüft werden, der Differenzvektor kann vorher noch modifiziert werden, damit die Prüfung eines der Kriterien 1) bis 4) beispielsweise vereinfacht wird. Eine mögliche Modifikation besteht z.B. darin die Differenz zwischen zwei benachbarten Vektorkomponenten zu bilden:

$$d\Delta r_i = \Delta r_i - \Delta r_{i-1}$$

oder die Differenz der Differenz zwischen zwei benachbarten Vektorkomponenten zu bilden:

$$dd\Delta r_i = d\Delta r_i - d\Delta r_{i-1} \ .$$

Das Verfahren zur Erkennung von Pupinspulen kann mit der in Fig. 7 dargestellten Schaltungsanordnung umgesetzt werden. Dabei wird auf die erste Methode zum Berechnen des Differenzvektors zurückgegriffen. Gleiche Elemente wie in Fig. 1 haben dieselben Bezugszeichen wie dort. Der Aufbau von Fig. 7 unterscheidet sich von dem in Fig. 1 dadurch, dass durch eine Frequenzgangmessvorrichtung 11 periodisch Sendesymbole an den Sender 2 ausgegeben werden, die von dem Sender 2 auf der Teilnehmeranschlussleitung 9 ausgesendet werden. Gleichzeitig gibt die Frequenzgangmessvorrichtung 11 den Symboltakt an den Sender 2, den Empfänger 3 und dessen vorgeschalteten A/D-Umsetzer 6 aus.

Das empfangene analoge Echosignal wird zwischen dem AD-Umsetzer 6 und dem Empfänger 3 abgegriffen und in der Frequenzgangmessvorrichtung 11 abgetastet, um für eine bestimmte Anzahl von Frequenzpunkten im Bereich von etwa 1 bis 5 kHz die Komponenten $a(f)$ und $b(f)$ (genauer die Stützwerte $a(f_i)$ und $b(f_i)$) zu erzeugen. Die Komponenten $a(f)$ und $b(f)$ sind der Realteil bzw. der Imaginärteil einer Funktion $F(f_i)$, die in einem Funktionsgenerator 12 berechnet wird.

Der Funktionsgenerator 12 gibt die Ausgangswerte $r_i$ an eine Matrixmultiplikationsvorrichtung 13 aus, durch die aus diesen Werten mit Hilfe einer Matrix-Multiplikation ein Differenzvektor ermittelt wird. Dazu werden wie oben beschrieben die Ausgangswerte $r_i$ mit einer Matrix $P=[E-Q\cdot R]$ multipliziert, so dass sich die Werte $\Delta r_i$ ergeben, die Eingangsgrößen einer Vergleichervorrichtung 14 sind.

In der Vergleichervorrichtung 14 wird mit einem geeigneten Kriterium, das aus den Koeffizienten des Differenzvektors abgeleitet wird, eine zuverlässige Aussage getroffen, ob eine pupinisierte Leitung vorhanden ist oder nicht.

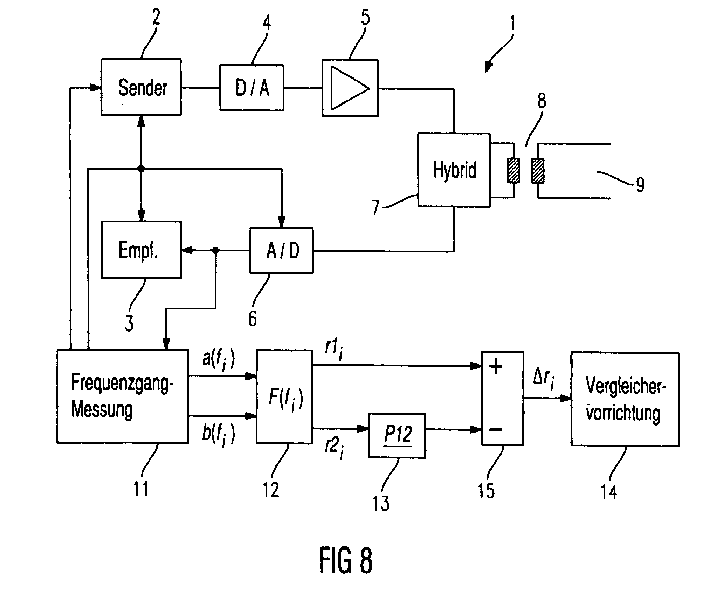

Eine zweite Ausführungsform der erfindungsgemäßen Schaltungsanordnung zum Erkennen von Pupinspulen ist in Fig. 8 gezeigt. Bei dieser Ausführungsform wird der Differenzvektor nach der alternativen, zweiten Methode berechnet. Gleiche Elemente wie in Fig. 1 und 7 haben dieselben Bezugszeichen wie dort. Der Aufbau von Fig. 8 unterscheidet sich von dem in Fig. 7 dadurch, dass von dem Funktionsgenerator 12 die Ausgangswerte $r1_i$ und $r2_i$ gebildet werden. Dabei bilden beispielsweise die Komponenten mit geradzahligem Index einen ersten Teilvektor $r1$ und die Komponenten mit ungeradzahligem Index einen zweiten Teilvektor $r2$. Der Teilvektor $r1$ mit den Komponenten $r1_i$ wird direkt an eine Differenzstufe 15 ausgegeben, währen der Teilvektor $r2$ mit den Komponenten $r2_i$ die Eingangsgröße der Matrixmultiplikationsvorrichtung 13 bildet, durch die aus den Werten $r2_i$ mit Hilfe einer Matrix-Multiplikation ein Zwischenvektor $P12\cdot r2$ ermittelt wird. Dieser Zwischenvektor wird in der Differenzstufe 15 von dem Teilvektor $r1$ abgezogen, so dass sich der Differenzvektor mit den Komponenten $\Delta r_i$ ergibt, die Eingangsgrößen der Vergleichervorrichtung 14 sind.

Anschließend wird das Verfahren analog zu der Vorrichtung in Fig. 7 zu Ende geführt.

Das Messverfahren kann in einem DSL-Transceiver einfach integriert werden. Die für die Messung des Frequenzgangs notwendigen Teilsysteme wie Sender und A/D-Wandler sind ohnehin vorhanden, sodass hierfür kein Zusatzaufwand entsteht. Die für die Auswertung notwendige Signalverarbeitung kann mit Hilfe eines in aller Regel ebenfalls vorhandenen Prozessors durchgeführt werden, wofür lediglich die Firmware des Transceivers erweitert werden muss.

Bezugszeichenliste

| | |
|---|---|
| 1 | Transceiver |
| 2 | Sender |
| 3 | Empfänger |
| 4 | D/A- Wandler |
| 5 | Leitungsverstärker, Line- Driver |
| 6 | A/D- Wandler |
| 7 | Leitungsanschaltung, Hybrid- Stufe |
| 8 | Leitungsübertrager |
| 9 | Anschlussleitung von Teilnehmer |
| 10 | Induktivität in Anschlussleitung |
| 11 | Frequenzgangmessung |
| 12 | Funktionsgenerator |
| 13 | Matrixmultiplikationsvorrichtung |
| 14 | Vergleichervorrichtung |
| 15 | Differenzstufe |

**Patentansprüche**

1. Verfahren zum Erkennen von in einer Teilnehmeranschlussleitung zwischengeschalteten Pupinspule, mit den Schritten:

   Aussenden von periodischen Sendesymbolen durch eine Sendevorrichtung (2, 4, 5),
   Empfangen, Abtasten und Weiterverarbeitung eines analogen Empfangssignals durch eine Empfangsvorrichtung (3, 6), Bestimmen des Frequenzgangs des Empfangssignals für eine vorgegebene Anzahl von Frequenzpunkten in einem vorgegebenen Frequenzbereich,

   **dadurch gekennzeichnet, dass**
   eine Funktion mit Funktionswerten ($F(f_i)$) aus dem Realteil und dem Imaginärteil des Frequenzgangs des Empfangssignals berechnet und
   ein Differenzvektor ($\Delta r_i$) aus den Funktionswerten ($F(f_i)$) durch eine Rechnereinheit (11, 12, 13, 14, 15) ermittelt wird, wobei
   aus den Komponenten des Differenzvektors ($\Delta r_i$) ein Kriterium abgeleitet wird, das angibt, ob eine pupinisierte Leitung vorhanden ist.

2. Verfahren nach Anspruch 1,
   **dadurch gekennzeichnet, dass**
   ein erster Teilvektor ($r1$) und ein zweiter Teilvektor ($r2$) aus den Funktionswerten ($F(f_i)$) durch einen Funktionsgenerator (12) gebildet wird,
   ein Zwischenvektor ($P12 \cdot r2$) aus dem zweiten Teilvektor ($r2$) durch eine Matrixmultiplikationsvorrichtung (13) ermittelt wird und
   aus dem ersten Teilvektor ($r1$) und dem Zwischenvektor ($P12 \cdot r2$) der Differenzvektor ($\Delta r_i$) in einer Differenzstufe (15) gebildet wird.

3. Verfahren nach Anspruch 2,
   **dadurch gekennzeichnet, dass**
   der erste Teilvektor ($r1$) als Komponenten die Funktionswerte ($F(f_i)$) mit geradzahligem Index umfasst und
   der zweite Teilvektor ($r2$) als Komponenten die Funktionswerte ($F(f_i)$) mit ungeradzahligem Index umfasst.

4. Verfahren nach einem der Ansprüche 1 bis 3,
   **dadurch gekennzeichnet, dass**
   das Kriterium darin besteht, dass die Differenz zwischen einem Maximalwert und einem Minimalwert der Komponenten des Differenzvektors ($Kriterium = \Delta r_{max} - \Delta r_{min}$) in einer Vergleichervorrichtung (14) mit einem Differenzvorgabewert verglichen wird, und ein Signal ausgegeben wird, wenn die Differenz größer als der Differenzvorgabewert ist.

**5.** Verfahren nach einem der Ansprüche 1 bis 3,
**dadurch gekennzeichnet, dass**
das Kriterium darin besteht, dass die Summe der Betragswerte der Komponenten des Differenzvektors

$$( Kriterium = \sum_i \Delta|r_i| )$$ in einer Vergleichervorrichtung (14) mit einem Summenvorgabewert verglichen wird, und ein Signal ausgegeben wird, wenn die Summe größer als der Summenvorgabewert ist.

**6.** Verfahren nach einem der Ansprüche 1 bis 3,
**dadurch gekennzeichnet, dass**
das Kriterium darin besteht, dass die Summe der Quadrate der Komponenten des Differenzvektors

$$( Kriterium = \sum_i \Delta r_i^2 )$$ in einer Vergleichervorrichtung (14) mit einem Quadratsummenvorgabewert verglichen wird, und ein Signal ausgegeben wird, wenn die Summe größer als der Quadratsummenvorgabewert ist.

**7.** Verfahren nach einem der Ansprüche 1 bis 3,
**dadurch gekennzeichnet, dass**
das Kriterium darin besteht, dass die Anzahl der wesentlich von Null verschiedenen Komponenten des Differenzvektors ($\Delta r_i$) in einer Vergleichervorrichtung (14) mit einem Nullkomponentenvorgabewert verglichen wird, und ein Signal ausgegeben wird, wenn die Summe größer als der Nullkomponentenvorgabewert ist.

**8.** Verfahren nach Anspruch 7,
**dadurch gekennzeichnet, dass**
zum Bestimmen der Anzahl der wesentlich von Null verschiedenen Komponenten des Differenzvektor ($\Delta r_i$) die Koeffizienten gerundet und mit einer endlichen Wortlänge dargestellt werden, wobei die Quantisierungsgröße (Wortlänge) so gewählt wird, dass bei einer nicht- pupinisierten Leitung sich für alle Koeffizienten die Werte Null ergeben.

**9.** Verfahren nach einem der vorangehenden Ansprüche,
**dadurch gekennzeichnet, dass**
der vorgegebene Frequenzbereich zwischen 1 und 5 kHz liegt.

**10.** Vorrichtung zum Erkennen von in einer Teilnehmeranschlussleitung zwischengeschalteten Pupinspule, mit:

einer Sendevorrichtung (2, 4, 5) zum Aussenden von periodischen Sendesymbolen,
einer Empfangsvorrichtung (3, 6) zum Empfangen, Abtasten und Weiterverarbeitung eines analogen Empfangssignals
**gekennzeichnet durch**
eine Rechnereinheit (11, 12, 13, 14, 15) zum:

Bestimmen des Frequenzgangs des Empfangssignals für eine vorgegebene Anzahl von Frequenzpunkten in einem vorgegebenen Frequenzbereich,
Berechnen einer Funktion mit Funktionswerten ($F(f_i)$) aus dem Realteil und dem Imaginärteil des Frequenzgangs des Empfangssignals und
Ermitteln eines Differenzvektors ($\Delta r_i$) aus den Funktionswerten ($F(f_i)$), wobei
aus den Komponenten des Differenzvektors ($\Delta r_i$) ein Kriterium abgeleitet wird, das angibt, ob eine pupinisierte Leitung vorhanden ist.

**11.** Vorrichtung nach Anspruch 10,
**dadurch gekennzeichnet, dass**
die Recheneinheit (11, 12, 13, 14, 15)
einen Funktionsgenerator (12) zum Bilden eines ersten Teilvektors ($r1$) und eines zweiten Teilvektors ($r2$) aus den Funktionswerten ($F(f_i)$,
eine Matrixmultiplikationsvorrichtung (13) zum Ermitteln eines Zwischenvektors ($P12 \cdot r2$) aus dem zweiten Teilvektor ($r2$) und
eine Differenzstufe (15) zum Bilden des Differenzvektors ($\Delta r_i$) aus dem ersten Teilvektor ($r1$) und dem Zwischenvektor ($P12 \cdot r2$) umfasst.

**12.** Vorrichtung nach einem der Ansprüche 10 oder 11,

**dadurch gekennzeichnet, dass**
die Recheneinheit (11, 12, 13, 14, 15) eine Vergleichervorrichtung (14) zum Vergleichen der Differenz zwischen einem Maximalwert und einem Minimalwert der Komponenten des Differenzvektors ($Kriterium = \Delta r_{max} - \Delta r_{min}$) mit einem Differenzvorgabewert und zum Ausgeben eines Signals, wenn die Differenz größer als der Differenzvorgabewert ist, umfasst.

13. Vorrichtung nach einem der Ansprüche 10 oder 11,
**dadurch gekennzeichnet, dass**
die Recheneinheit (11, 12, 13, 14, 15) eine Vergleichervorrichtung (14) zum Vergleichen der Summe der Betragswerte der Komponenten des Differenzvektors $\left( Kriterium = \sum_i \Delta |r_i| \right)$ mit einem Summenvorgabewert und zum Ausgeben eines Signals, wenn die Summe größer als der Summenvorgabewert ist, umfasst.

14. Vorrichtung nach einem der Ansprüche 10 oder 11,
**dadurch gekennzeichnet, dass**
die Recheneinheit (11, 12, 13, 14, 15) eine Vergleichervorrichtung (14) zum Vergleichen der Summe der Quadrate der Komponenten des Differenzvektors $\left( Kriterium = \sum_i \Delta r_i^2 \right)$ mit einem Quadratsummenvorgabewert und zum Ausgeben eines Signals, wenn die Summe größer als der Quadratsummenvorgabewert ist, umfasst.

15. Vorrichtung nach einem der Ansprüche 10 oder 11,
**dadurch gekennzeichnet, dass** die Recheneinheit (11, 12, 13, 14, 15) eine Vergleichervorrichtung (14) zum Vergleichen der Anzahl der wesentlich von Null verschiedenen Komponenten des Differenzvektors mit einem Nullkomponentenvorgabewert und zum Ausgeben eines Signals, wenn die Summe größer als der Nullkomponentenvorgabewert ist, umfasst.

16. Vorrichtung nach einem der Ansprüche 10 bis 15,
**dadurch gekennzeichnet, dass**
der vorgegebene Frequenzbereich zwischen etwa 1 und 5 kHz liegt.

**Claims**

1. Method for the identification of Pupin coil interposed in a subscriber connection line, having the following steps:

    transmission of periodic transmission symbols by a transmission device (2, 4, 5),
    reception, sampling and further processing of an analog reception signal by a reception device (3, 6),
    determination of the frequency response of the reception signal for a prescribed number of frequency points in a prescribed frequency range,
    **characterized in that** a function with function values ($F(f_i)$) is calculated from the real part and the imaginary part of the frequency response of the reception signal, and
    a differential vector ($\Delta r_i$) is determined from the function values ($F(f_i)$) by a computer unit (11, 12, 13, 14, 15), a criterion which specifies whether a pupinized line is present being derived from the components of the differential vector ($\Delta r_i$).

2. Method according to Claim 1,
**characterized in that**
a first partial vector ($r1$) and a second partial vector ($r2$) are formed from the function values ($F(f_i)$) by a function generator (12),
an intermediate vector ($P12 \cdot r2$) is determined from the second partial vector ($r2$) by a matrix multiplication device (13) and
the differential vector ($\Delta r_i$) is formed from the first partial vector ($r1$) and the intermediate vector ($P12 \cdot r2$) in a differential stage (15).

3. Method according to Claim 2,
**characterized in that**
the first partial vector ($r1$) comprises, as components, the function values ($F(f_i)$) with an even-numbered index and

the second partial vector ($r2$) comprises, as components, the function values ($F(f_i)$) with an odd-numbered index.

4.  Method according to one of Claims 1 to 3,
    **characterized in that**
    the criterion consists in the difference between a maximum value and a minimum value of the components of the differential vector *(criterion = $\Delta r_{max}$ -$\Delta r_{min}$)* being compared with a differential prescribed value in a comparator device (14), and a signal being output if the difference is greater than the differential prescribed value.

5.  Method according to one of Claims 1 to 3,
    **characterized in that**
    the criterion consists in the sum of the absolute values of the components of the differential vector

    $$( \ criterion = \sum_i \Delta \left| r_i \right| \ ) \ ,$$ being compared with a sum prescribed value in a comparator device (14), and a signal being output if the sum is greater than the sum prescribed value.

6.  Method according to one of Claims 1 to 3,
    **characterized in that**

    the criterion consists in the sum of the squares of the components of the differential vector $( \ criterion = \sum_i \Delta r_i^{\ 2} \ )$

    being compared with a square sum prescribed value in a comparator device (14), and a signal being output if the sum is greater than the square sum prescribed value.

7.  Method according to one of Claims 1 to 3,
    **characterized in that**
    the criterion consists in the number of components of the differential vector ($\Delta r_i$) which are significantly different from zero being compared with a zero component prescribed value in a comparator device (14), and a signal being output if the sum is greater than the zero component prescribed value.

8.  Method according to Claim 7,
    **characterized in that**,
    in order to determine the number of components of the differential vector ($\Delta r_i$) which are significantly different from zero, the coefficients are rounded and represented with a finite word length, the quantization size (word length) being chosen such that the values zero result for all the coefficients in the case of a non-pupinized line.

9.  Method according to one of the preceding claims,
    **characterized in that**
    the prescribed frequency range lies between 1 and 5 kHz.

10. Device for the identification of Pupin coil interposed in a subscriber connection line, having:

    a transmission device (2, 4, 5) for the transmission of periodic transmission symbols,
    a reception device (3, 6) for the reception, sampling and further processing of an analog reception signal,
    **characterized by**
    a computer unit (11, 12, 13, 14, 15) for:

    determining the frequency response of the reception signal for a prescribed number of frequency points in a prescribed frequency range,
    calculating a function with function values ($F(f_i)$) from the real part and the imaginary part of the frequency response of the reception signal, and
    determining a differential vector ($\Delta r_i$) from the function values ($F(f_i)$),
    a criterion which specifies whether a pupinized line is present being derived from the components of the differential vector ($\Delta r_i$).

11. Device according to Claim 10,
    **characterized in that**
    the computing unit (11, 12, 13, 14, 15) comprises a function generator (12) for forming a first partial vector ($r1$) and a second partial vector ($r2$) from the function values ($F(f_i)$),

a matrix multiplication device (13) for determining an intermediate vector ($P12·r2$) from the second partial vector ($r2$) and

a differential stage (15) for forming the differential vector ($\Delta r_i$) from the first partial vector ($r1$) and the intermediate vector ($P12.r2$).

**12.** Device according to either of Claims 10 and 11,
**characterized in that**
the computing unit (11, 12, 13, 14, 15) comprises a comparator device (14) for comparing the difference between a maximum value and a minimum value of the components of the differential vector ($criterion = \Delta r_{max} - \Delta r_{min}$) with a differential prescribed value and for outputting a signal if the difference is greater than the differential prescribed value.

**13.** Device according to either of Claims 10 and 11,
**characterized in that**
the computing unit (11, 12, 13, 14, 15) comprises a comparator device (14) for comparing the sum of the absolute values of the components of the differential vector ( $criterion = \sum_i \Delta|r_i|,$ ) with a sum prescribed value and for outputting a signal if the sum is greater than the sum prescribed value.

**14.** Device according to either of Claims 10 and 11,
**characterized in that**
the computing unit (11, 12, 13, 14, 15) comprises a comparator device (14) for comparing the sum of the squares of the components of the differential vector ( $criterion = \sum_i \Delta r_i^2$ ) with a square sum prescribed value and for outputting a signal if the sum is greater than the square sum prescribed value.

**15.** Device according to either of Claims 10 and 11,
**characterized in that**
the computing unit (11, 12, 13, 14, 15) comprises a comparator device (14) for comparing the number of components of the differential vector which differ significantly from zero with a zero component prescribed value and for outputting a signal if the sum is greater than the zero component prescribed value.

**16.** Device according to one of Claims 10 to 15,
**characterized in that**
the prescribed frequency range lies between about 1 and 5 kHz.

## Revendications

**1.** Procédé de reconnaissance d'une bobine de pupinisation intercalée dans une ligne de raccordement d'abonné, avec les étapes :

envoi de symboles périodiques d'émission par l'intermédiaire d'un dispositif d'émission (2, 4, 5),
réception, analyse et traitement plus avant un signal analogique de réception par un dispositif de réception (3, 6), détermination de la bande passante du signal de réception pour un nombre prédéterminé de points de fréquence dans une plage de fréquence prédéterminée, **caractérisé en ce qu'**une fonction ayant des valeurs de fonction (F($f_i$)) est calculée à partir de la partie réelle et de la partie imaginaire de la bande passante du signal de réception et
qu'un vecteur différentiel ($\Delta r_i$) est déterminé à partir des valeurs de fonction (F($f_i$)) par une unité calculatrice (11, 12, 13, 14, 15),
un critère qui indique si une ligne de pupinisation est présente, étant déduit des composants du vecteur différentiel ($\Delta r_i$).

**2.** Procédé selon la revendication 1,
**caractérisé en ce qu'**un premier vecteur partiel ($r1$) et un second vecteur partiel ($r2$) sont formés à partir des valeurs de fonction (F($f_i$)) par un générateur de fonction (12),
qu'un vecteur intermédiaire ($P12 · r2$) est déterminé au moyen d'un dispositif de multiplication de matrice (13) à partir du second vecteur partiel ($r2$) et
que le vecteur différentiel ($\Delta r_i$) est formé dans une étape différentielle (15) à partir du premier vecteur partiel ($r1$) et du vecteur intermédiaire (P12.r2).

3.  Procédé selon la revendication 2,
    **caractérisé en ce que**
    le premier vecteur partiel ($r1$) comprend en tant que composants les valeurs de fonction ($F(f_j)$) avec un index de chiffres pairs et
    que le second vecteur partiel ($r2$) comprend en tant que composants les valeurs de fonction ($F(f_i)$) avec un index de chiffres impairs.

4.  Procédé selon une des revendications 1 à 3,
    **caractérisé en ce que**
    le critère consiste dans le fait que la différence entre une valeur maximale et une valeur minimale des composants du vecteur différentiel ($critère = \Delta r_{max} - \Delta r_{min}$) est comparée dans un dispositif comparateur (14) à une valeur différentielle prédéterminée, et qu'un signal est émis si cette différence est supérieure à la valeur différentielle prédéterminée.

5.  Procédé selon une des revendications 1 à 3,
    **caractérisé en ce que**
    le critère consiste dans le fait que la somme des montants des composants du vecteur différentiel ($critère = \Sigma_i \Delta|r_i|$) est comparée dans un dispositif comparateur (14) à une valeur de somme prédéterminée, et qu'un signal est émis si la somme est supérieure à la valeur de somme prédéterminée.

6.  Procédé selon une des revendications 1 à 3,
    **caractérisé en ce** le critère consiste dans le fait que la somme des carrés des composants du vecteur différentiel ($critère = \Sigma_i \Delta r_i^2$) est comparée dans un dispositif comparateur (14) à une valeur prédéterminée de somme des carrés, et qu'un signal est émis si la somme est supérieure à la valeur prédéterminée de somme des carrés.

7.  Procédé selon une des revendications 1 à 3,
    **caractérisé en ce** le critère consiste dans le fait que le nombre des composants du vecteur différentiel ($\Delta r_i$) différant substantiellement de zéro est comparé dans un dispositif comparateur (14) à une valeur prédéterminée de composants à zéro, et qu'un signal est émis si la somme est supérieure à la valeur prédéterminée des composants à zéro.

8.  Procédé selon la revendication 7,
    **caractérisée en ce que**
    pour déterminer le nombre des composants du vecteur différentiel ($\Delta r_i$) différant substantiellement de zéro, les coefficients sont arrondis et représentés avec une longueur de mot finie, la grandeur de quantification (longueur de mot) étant choisie de telle façon que les valeurs donnent zéro pour tous les coefficients dans le cas d'une ligne non pupinisée.

9.  Procédé selon une des revendications précédentes,
    **caractérisé en ce que** la plage de fréquence prédéterminée se trouve entre 1 et 5 kHz.

10. Dispositif de reconnaissance d'une bobine de pupinisation intercalée dans une ligne de raccordement d'abonné, avec :

    un dispositif d'émission (2, 4, 5) pour émettre des symboles périodiques d'émission,
    un dispositif de réception (3, 6) pour réceptionner, analyser et traiter plus avant un signal analogique de réception

    **caractérisé par**
    une unité calculatrice (11, 12, 13, 14, 15) pour :

    déterminer la bande passante du signal de réception pour un nombre prédéterminé de points de fréquence dans une plage de fréquence prédéterminée,
    calculer une fonction avec des valeurs de fonction ($F(f_i)$) à partir de la partie réelle et de la partie imaginaire de la bande passante du signal de réception et
    déterminer un vecteur différentiel ($\Delta r_i$) à partir des valeurs de fonction ($F(f_j)$),

un critère qui indique une ligne de pupinisation est présente, étant déduit des composants du vecteur différentiel ($\Delta r_i$).

**11.** Dispositif selon la revendication 10,
**caractérisé en ce que** l'unité calculatrice (11, 12, 13, 14, 15) comprend
un générateur de fonction (12) pour former un premier vecteur partiel ($r1$) et un second vecteur partiel ($r2$) à partir des valeurs de fonction (F($f_i$)),
un dispositif de multiplication de matrice (13) pour déterminer un vecteur intermédiaire ($P12 \cdot r2$) à partir du second vecteur partiel ($r2$)
et
un étage différentiel (15) pour former le vecteur différentiel ($\Delta r_i$) à partir du premier vecteur partiel ($r1$) et du vecteur intermédiaire ($P12 \cdot r2$).

**12.** Dispositif selon l'une des revendication 10 ou 11,
**caractérisé en ce que** l'unité calculatrice (11, 12, 13, 14, 15) comprend un dispositif comparateur (14) pour comparer la différence entre une valeur maximale et une valeur minimale des composants du vecteur différentiel (critère = $\Delta r_{max} - \Delta r_{min}$) à une valeur différentielle prédéterminée et pour émettre un signal lorsque cette différence est supérieure à la valeur différentielle prédéterminée.

**13.** Dispositif selon une des revendications 10 ou 11,
**caractérisée en ce que** l'unité calculatrice (11, 12, 13, 14, 15) comprend un dispositif comparateur (14) pour comparer la somme des valeurs des composants du vecteur différentiel (*critère* = $\Sigma i \, \Delta|r_i|$) à une valeur prédéterminée de somme et pour émettre un signal si cette somme est supérieure à la valeur prédéterminée de somme.

**14.** Dispositif selon une des revendications 10 ou 11,
**caractérisée en ce que** l'unité calculatrice (11, 12, 13, 14, 15) comprend un dispositif comparateur (14) pour comparer la somme des carrés des composants du vecteur différentiel (*critère* = $\Sigma_i \, \Delta r_i^2$) à une valeur prédéterminée de somme des carrés et pour émettre un signal si cette somme est supérieure à la valeur prédéterminée de somme des carrés.

**15.** Dispositif selon une des revendications 10 ou 11,
**caractérisé en ce que** l'unité calculatrice (11, 12, 13, 14, 15) comprend un dispositif comparateur (14) pour comparer le nombre des composants du vecteur différentiel ($\Delta r_i$) substantiellement différents de zéro à une valeur prédéterminée des composants à zéro et pour émettre un signal si la somme est supérieure à la valeur prédéterminée des composants à zéro.

**16.** Dispositif selon une des revendications 10 à 15,
**caractérisé en ce que** plage de fréquence se trouve entre 1 et 5 kHz.

1

Sender 2 — D / A 4 — ▷ 5 — Hybrid 7

8

9

Empf. 3 — A / D 6 — Hybrid

**FIG 1**

10    10    10    10

10    10    10    10

$\frac{L}{2}$    L    $\frac{L}{2}$

**FIG 2**

F(f)

0.4

0.2

0

①

③

②

0    1    2    3    4    kHz    5

Übertrager: 2.5 mH

① 0,4 mm / 7,3 km Leitung, keine Pupinspule

② 0,4 mm / 7,3 km Leitung, 4 Pupinspulen (H88)

③ 0,4 mm / 1,83 km Leitung, keine Pupinspule

## FIG 3

$\Delta F(f)$

0.04

0.02

0

-0.02

-0.04

③    ②

①

0    1    2    3    kHz    4

Übertrager: 2.5 mH

① 0,4 mm / 7,3 km Leitung, keine Pupinspule

② 0,4 mm / 7,3 km Leitung, 4 Pupinspulen (H88)

③ 0,4 mm / 1,83 km Leitung, keine Pupinspule

## FIG 4

$\Delta r(f_i)$

0.01

0.005

0

-0.005

-0.01

②

①

③

1.5    2    2.5    3    3.5    4    4.5    kHz

Übertrager: 2.5 mH

① 0,4 mm / 7,3 km Leitung, keine Pupinspule

② 0,4 mm / 7,3 km Leitung, 4 Pupinspulen (H88)

③ 0,4 mm / 1,83 km Leitung, keine Pupinspule

## FIG 5

Übertrager: 2.5 mH

① 0,4 mm / 7,3 km Leitung, keine Pupinspule

② 0,4 mm / 7,3 km Leitung, 4 Pupinspulen (H88)

③ 0,4 mm / 1,83 km Leitung, keine Pupinspule

FIG 6

FIG 7

FIG 8